# EUROPÄISCHE PATENTSCHRIFT

(11) **EP 0 785 237 B1**
(45) Veröffentlichungstag und Bekanntmachung des Hinweises auf die Patenterteilung: **11.07.2001**
(21) Anmeldenummer: 97810011.3
(22) Anmeldetag: 10.01.1997
(51) Int. Cl.: C09B 62/09, C09B 62/513, C09B 62/01

(54) **Reaktivfarbstoffe, ihre Herstellung und Verwendung**
Reactive dyes, their preparation and use
Colorants réactifs, leur préparation et leur utilisation

(30) Priorität: 19.01.1996 CH 15096
(43) Veröffentlichungstag der Anmeldung: 23.07.1997
(73) Patentinhaber: Ciba Specialty Chemicals Holding Inc., 4057 Basel (CH)
(72) Erfinder: Deitz, Rolf, 79400 Kandern (DE); Herzig, Paul, 4057 Basel (CH); Tzikas, Athanassios, 4133 Pratteln (CH)

(56) Entgegenhaltungen:
- EP-A- 0 647 683

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind somit Verbindungen der Formel 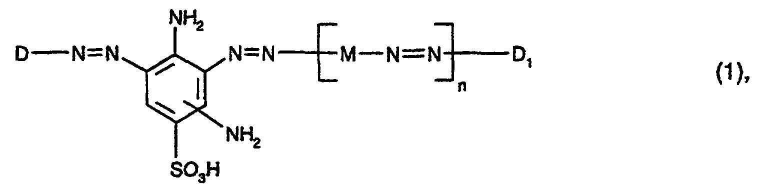
worin D₁ ein Rest der Formel 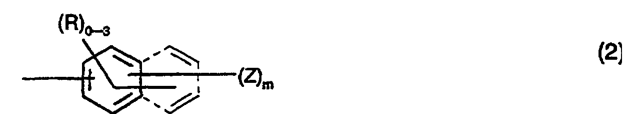 ist,
D für einen Rest der Formel 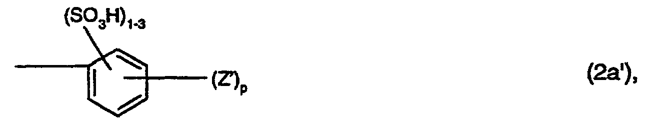 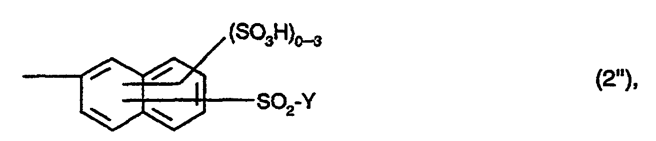 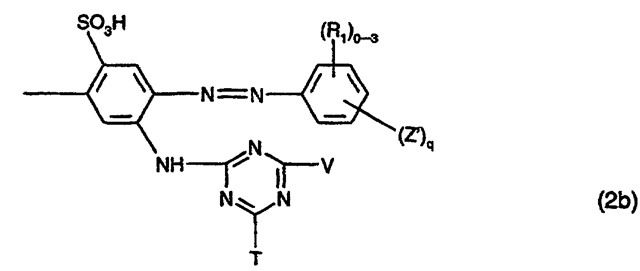 oder 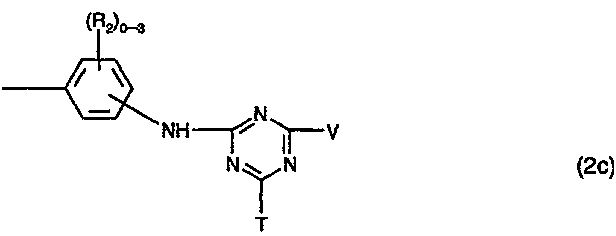 steht,
M ein unsubstituierter oder durch Sulfo, C₁-C₄-Alkyl, C₁-C₄-Alkoxy, Halogen, C₂-C₄-Alkanoylamino, Ureido oder einen Rest der Formel 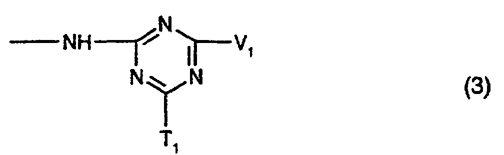 substituierter Phenylenrest oder ein unsubstituierter oder durch Sulfo oder Hydroxy substituierter Naphthylenrest ist,
(R)₀₋₃, (R₁)₀₋₃ und (R₂)₀₋₃ unabhängig voneinander je für 0 bis 3 gleiche oder verschiedene Reste aus der Gruppe Sulfo, C₁-C₄-Alkyl, C₁-C₄-Alkoxy und Halogen stehen,
T und T₁ unabhängig voneinander je Halogen oder unsubstituiertes oder durch Carbamoyl oder Carboxy substituiertes 1-Pyridinyl sind,
V und V₁ unabhängig voneinander je einen nicht-reaktiven Aminorest bedeuten,
Z und Z' unabhängig voneinander je für einen Rest der Formel

   -SO₂-Y (4a)

   oder

   -CONH-(CH₂)ᵣ-SO₂-Y (4b)

   stehen,
Y Vinyl oder einen Rest -CH₂-CH₂-U und U eine Abgangsgruppe bedeuten,
r für eine ganze Zahl von 1 bis 6 steht und
n, m, p und q unabhängig voneinander je die Zahl 0 oder 1 sind,
mit der Massgabe, dass m die Zahl 1 bedeutet, wenn D für einen Rest der Formel (2c) oder für einen Rest der Formel (2a) oder (2b), worin p oder q 0 ist, steht.

(R)₀₋₃, (R₁)₀₋₃ und (R₂)₀₋₃ bedeuten unabhängig voneinander je bevorzugt 0 bis 3 Reste aus der Gruppe Sulfo, Methyl und Methoxy.

Bedeutet Y einen Rest -CH₂-CH₂-U, so kann es sich bei der Abgangsgruppe U z.B. um -Cl,-Br, -F, -OSO₃H, -SSO₃H, -OCO-CH₃, OPO₃H₂, -OCO-C₆H₅, OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

r bedeutet bevorzugt die Zahl 2, 3 oder 4, besonders bevorzugt 2 oder 3 und insbesondere bevorzugt die Zahl 2.

Z und Z' stehen unabhängig voneinander je bevorzugt für einen Rest der Formel (4a), worin für Y die zuvor angegebenen Bedeutungen und Bevorzugungen gelten.

Beispiele für geeignete Reste T und T₁ sind Brom, Chlor, Fluor, 3-Carboxypyridin-1-yl oder 3-Carbamoylpyridin-1-yl. T und T₁ bedeuten unabhängig voneinander je bevorzugt Chlor oder Fluor und besonders bevorzugt je Chlor. T und T₁ können verschieden oder vorzugsweise gleich sein.

Bei V und V₁ als nicht-reaktivem Aminorest kann es sich z.B. um Amino; N-C₁-C₄-Alkylamino oder N,N-Di-C₁-C₄-Alkylamino, wobei das Alkyl jeweils z.B. durch Sulfo, Sulfato, Hydroxy, Carboxy oder Phenyl substituiert sein kann; Cyclohexylamino; Phenylamino oder Naphthylamino, wobei das Phenyl oder Naphthyl jeweils z.B. durch C₁-C₄-Alkyl, C₁-C₄-Alkoxy, Amino, C₂-C₄-Alkanoylamino, Carboxy, Sulfo oder Halogen substituiert sein kann; N-C₁-C₄-Alkyl-N-phenylamino, wobei das Alkyl und Phenyl gegebenenfalls wie zuvor geschildert substituiert sein kann, oder um Morpholino handeln.

Beispiele für geeignete nicht-reaktive Aminoreste V und V₁ sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2- oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, N-β-Hydroxyethyl-N-phenylamino und Morpholino.

V und V₁ stehen unabgängig voneinander je bevorzugt für Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy oder Sulfo substituiertes N-C₁-C₂-Alkyl-N-phenylamino oder für Morpholino und besonders bevorzugt je für Amino, unsubstituiertes oder durch Sulfo substituiertes N-Mono- oder N,N-Di-C₁-C₂-Alkylamino, durch 1 bis 3 gleiche Reste aus der Gruppe Methyl, Methoxy und Sulfo substituiertes Phenylamino oder für 1 bis 3 Sulfogruppen tragendes 1- oder 2-Naphthylamino.

Die Variablen V und V₁ können verschieden oder vorzugsweise gleich sein.

m, p und q stehen unabhängig voneinander je bevorzugt für die Zahl 1.

D₁ steht als Rest der Formel (2) bevorzugt für einen Rest der Formel 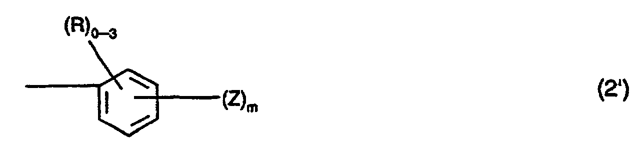 oder 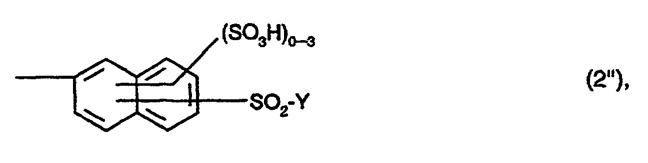 worin für (R)₀₋₃ und (Z)ₘ jeweils die zuvor angegebenen Bedeutungen und Bevorzugungen gelten.

Besonders bevorzugt steht D₁ als Rest der Formel (2) für einen Rest der Formel 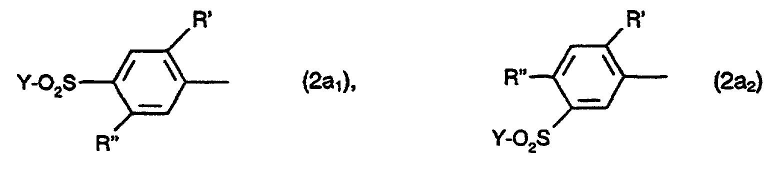 oder 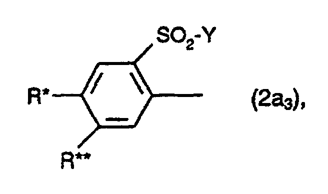 worin R' Wasserstoff, Methyl, Methoxy oder Sulfo, R" Wasserstoff oder Methoxy und einer der Reste R* und R** Wasserstoff und der andere Sulfo sind und für Y die zuvor angegebenen Bedeutungen und Bevorzugungen gelten.

Besonders bevorzugt steht D als Rest der Formel (2a') für einen Rest der Formel (2a₁), (2a₂) oder (2a₃), worin R' Sulfo, R" Wasserstoff und einer der Reste R* und R** Wasserstoff und der andere Sulfo sind und für Y die zuvor angegebenen Bedeutungen und Bevorzugungen gelten.

Beispiele für besonders bevorzugte Reste D₁ der Formel (2) sind: 4-β-Sulfatoethylsulfonylphenyl, 3-β-Sulfatoethylsulfonylphenyl, 2-Suifo-4-β-sulfatoethylsulfonylphenyl, 2-Sulfo-5-β-sulfatoethylsulfonylphenyl, 2-β-sulfatoethylsulfonyl-5-sulfophenyl, 2-Methoxy-4-β-sulfatoethylsulfonylphenyl, 2-Methoxy-5-β-sulfatoethylsulfonylphenyl, 2-Methyl-4-β-sulfatoethylsulfonylphenyl, 2,5-Dimethoxy-4-β-sulfatoethylsulfonylphenyl und 2-Methoxy-5-methyl-4-β-sulfatoethylsulfonylphenyl sowie die genannten Reste jeweils in vinylierter Form.

Beispiele für besonders bevorzugte Reste D der Formel (2a') sind: 2-Sulfo-4-β-sulfatoethylsulfonylphenyl, 2-Sulfo-5-β-sulfatoethylsulfonylphenyl, 2-β-sulfatoethylsulfonyl-5-sulfophenyl, sowie die genannten Reste jeweils in vinylierter Form.

D₁ bedeutet als Rest der zuvor angegebenen Formel (2) insbesondere bevorzugt je 4-β-Sulfatoethylsulfonylphenyl oder 4-Vinylsulfonylphenyl.

Bedeutet D einen Rest der zuvor angegebenen Formel (2b), entspricht dieser bevorzugt der Formel 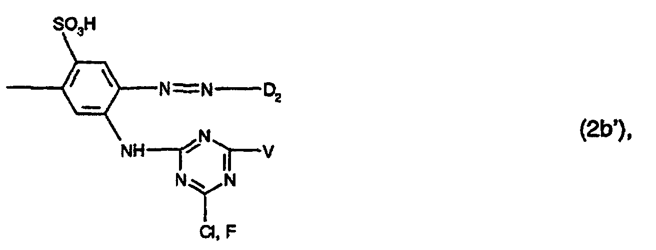 worin D₂ ein Rest der zuvor angegebenen Formel (2a') und insbesondere der Formel (2a₁), (2a₂) oder (2a₃) ist und für V die zuvor angegebenen Bedeutungen und Bevorzugungen gelten. D₂ steht in Formel (2b') besonders bevorzugt für 4-Vinylsulfonylphenyl oder 4-β-Sulfatoethylsulfonylphenyl.

Bedeutet D einen Rest der zuvor angegebenen Formel (2c), entspricht dieser bevorzugt der Formel 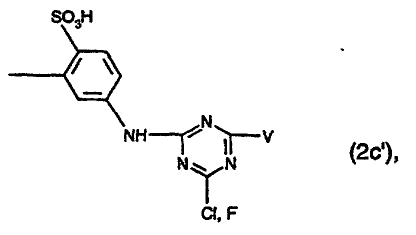 worin für V die zuvor angegebenen Bedeutungen unds Bevorzugungen gelten.

Eine Gruppe von besonders bevorzugten Verbindungen der zuvor angegebenen Formel (1) sind solche, worin D einem Rest der Formel (2b) oder insbesondere der Formel (2b') entspricht. Eine weitere Gruppe von bevorzugten Verbindungen der zuvor angegebenen Formel (1) sind solche, worin D einem Rest der Formel (2a₁) entspricht.

Bedeutet M einen Phenylenrest, so entspricht dieser bevorzugt der Formel 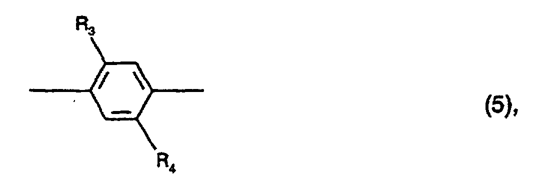 worin R₃ Wasserstoff, Sulfo, C₁-C₄-Alkyl oder C₁-C₄-Alkoxy und R₄ Wasserstoff, Sulfo, C₁-C₄-Alkyl, C₁-C₄-Alkoxy, C₂-C₄-Alkanoylamino, Ureido oder ein Rest der zuvor angegebenen Formel (3) ist. Die Formel (5) ist dabei so zu verstehen, dass die linke Bindung zur Diaminobenzolsulfonsäure und die rechte Bindung zum Rest D₁ zeigt.

M steht als Phenylenrest besonders bevorzugt für einen Rest der oben angegebenen Formel (5), worin R₃ Wasserstoff, Sulfo, Methyl oder Methoxy und R₄ Wasserstoff, Acetylamino, Ureido, Methoxy, Methyl oder ein Rest der zuvor angegebenen Formel (3), worin für T₁ unabhängig die zuvor für T und für V₁ unabhängig die zuvor für V angegebenen Bedeutungen und Bevorzugungen gelten.

Bedeutet M einen Naphthylrest, so ist dieser bevorzugt ein gegebenenfalls durch Sulfo substituierter Rest. Besonders bevorzugt entspricht dieser der Formel 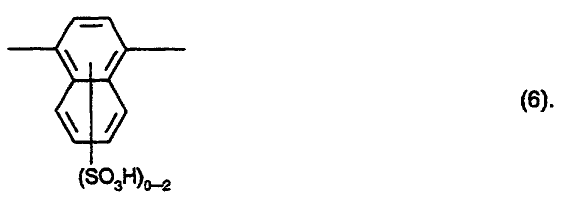 n bedeutet bevorzugt die Zahl 0.

Eine bevorzugte Ausführungsform der vorliegenden Erfindung betrifft Verbindungen der Formel 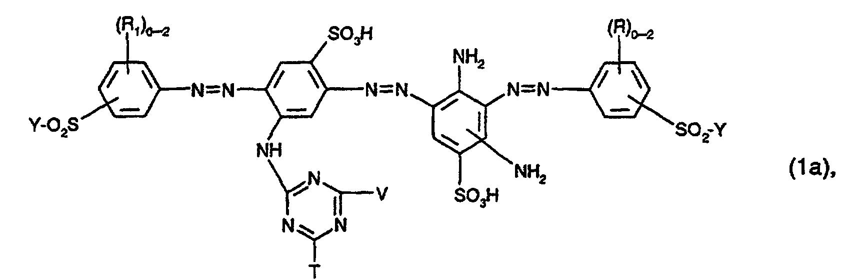 worin (R)₀₋₂ und (R₁)₀₋₂ gleich sind und je für 0 bis 2 gleiche oder verschiedene Reste aus der Gruppe Sulfo, Methyl und Methoxy stehen, Y Vinyl oder β-Sulfatoethyl ist, T Fluor oder insbesondere Chlor bedeutet und V Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy oder Sulfo substituiertes N-C₁-C₂-Alkyl-N-phenylamino oder Morpholino ist.

Eine besonders bevorzugte Ausführungsform der vorliegenden Erfindung betrifft Verbindungen der Formel 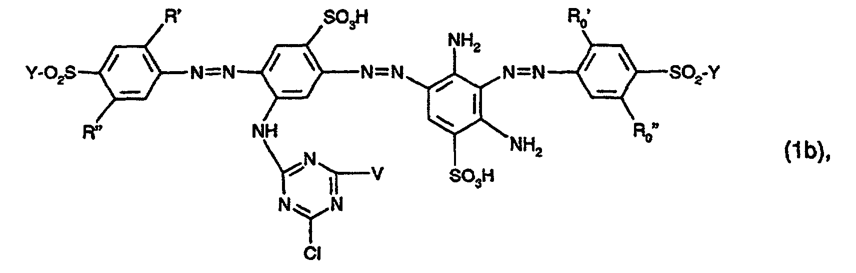 worin R' und R₀' unabhängig voneinander je Wasserstoff, Methyl, Methoxy oder Sulfo sind, R" und R₀" unabhängig voneinander je Wasserstoff oder Methoxy bedeuten, Y Vinyl oder β-Sulfatoethyl ist und V Amino, unsubstituiertes oder durch Sulfo substituiertes N-Mono- oder N,N-Di-C₁-C₂-Alkylamino, durch 1 bis 3 gleiche Reste aus der Gruppe Methyl, Methoxy und Sulfo substituiertes Phenylamino oder 1 bis 3 Sulfogruppen tragendes 1- oder 2-Naphthylamino bedeutet. Eine insbesondere bevorzugte Ausführungsform der vorliegenden Erfindung betrifft Verbindungen der oben angegebenen Formel (1b), worin R', R₀', R" und R₀" je Wasserstoff sind.

In den Verbindungen der Formel (1) vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

C₁-C₄-Alkyl bedeutet generell Methyl, Ethyl, n- oder iso-Propyl oder n-, iso-, sec.- oder tert.-Butyl, vorzugsweise Methyl oder Ethyl und insbesondere bevorzugt Methyl. C₁-C₄-Alkoxy bedeutet generell Methoxy, Ethoxy, n- oder iso-Propoxy oder n-, iso-, sec.- oder tert.-Butoxy, vorzugsweise Methoxy oder Ethoxy und besonders bevorzugt Methoxy. Halogen steht generell z.B. für Fluor, Chlor oder Brom, vorzugsweise für Chlor oder Fluor und insbesondere bevorzugt für Chlor. Beispiele für C₂-C₄-Alkanoylamino sind Propionylamino oder insbesondere Acetylamino.

Gegenstand der vorliegenden Erfindung ist ferner ein Verfahren zur Herstellung von Reaktivfarbstoffen der Formel (1), welches dadurch gekennzeichnet ist, dass man je 1 Moläquivalent einer Verbindung der Formel

D - NH₂ (7),

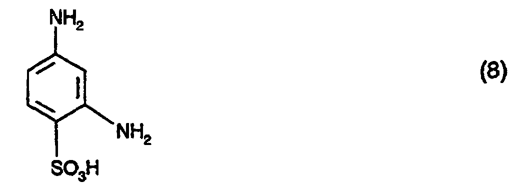

und 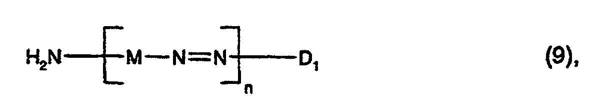 worin die Variablen die zuvor angegebene Bedeutung haben, durch Diazotieren und Kuppeln in beliebiger Reihenfolge miteinander umsetzt.

Die Diazotierung der Verbindungen der Formeln (7) und (9) erfolgt jeweils in üblicher Weise, z.B. indem man sie in mineralsaurer Lösung, z.B. salzsaurer Lösung mit einem Nitrit, z.B. Natriumnitrit, bei niedriger Temperatur, z.B. bei 0 bis 5°C, behandelt.

Die Reihenfolge der Kupplungen der diazotierten Verbindungen der Formeln (7) und (9) mit der Verbindung der Formel (8) bestimmt die Stellung der zweiten Aminogruppe in den Verbindungen der Formel (1). Die erste Diazokomponente wird im allgemeinen in der 6-Position und die zweite Diazokomponente in der 2-Position der 1,3-Diaminobenzol-4-sulfonsäure gekuppelt. Die Kupplungen finden vorteilhaft bei einem neutralen bis leicht sauren pH-Wert, z.B. bei pH 3 bis 7 und bevorzugt 4,5 bis 6,5, und niedrigen Temperaturen, z.B. 0 bis 30°C, statt.

Die Verbindungen der Formel (7), worin D ein Rest der Formel (2b) ist, sind z.B. aus der EP-A-647683 bekannt Die übrigen Verbindungen der Formel (7) sowie die Verbindungen der Formeln (8) und (9) sind bekannt oder können in Analogie zu bekannten Verbindungen hergestellt werden. Die etwaige Einführung eines Pyridiniumrests T oder T₁ erfolgt in der Regel im Anschluss an eine Kondensationsreaktion der entsprechenden Cyanurhalogenide.

Die erfindungsgemässen Verbindungen der Formel (1) sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Verbindungen der Formel (1) eignen sich als Farbstoffe zum Färben und Bedrucken der verschiedensten Materialien, wie hydroxylgruppenhaltigen oder stickstoffhaltigen Fasermaterialien. Als Beispiele für stickstoffhaltige Fasermaterialien seien Seide, Leder, Wolle, Polyamidfasern und Polyurethane genannt. Die erfindungsgemässen Farbstoffe sind insbesondere zum Färben und Bedrucken von cellulosehaltigen Fasermaterialien aller Art geeignet. Solche cellulosehaltige Fasermaterialien sind beispielsweise die natürlichen Cellulosefasem, wie Baumwolle, Leinen und Hanf, sowie Zellstoff und regenerierte Cellulose, vorzugsweise Baumwolle. Die erfindungsgemässen Farbstoffe sind auch zum Färben oder Bedrucken von cellulosehaltigen Mischgeweben, z.B. von Gemischen aus Baumwolle und Polyamidfasern oder besonders von Baumwolle/Polyestermischfasern geeignet.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und insbesondere die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 36,9 Teile Cyanurchlorid werden in 150 Teilen Eis/Wasser und wenig eines Netzmittels verrührt. Man lässt bei 0 - 2° C innerhalb von 40 Min. eine Lösung aus 25,25 Teilen Taurin in 50 Teilen Wasser zulaufen und kondensiert bei einem pH von 7 - 8 durch Zutropfen von 2n Natronlauge. Man rührt bei 0 - 5°C und einem pH von 7 - 7,5 nach, bis kein Cyanurchlorid mehr nachweisbar ist. Nun gibt man eine neutrale Lösung aus 39,48 Teilen 1,3-Phenylendiamin-4-sulfosäure in 100 Teilen Wasser dazu. Man kondensiert bei einer Temperatur von 5 - 20°C und hält den pH bei 8 - 9 unter Zugabe von 2n Natronlauge. Nach beendeter Kondensation wird die Reaktionslösung mit KCI ausgesalzen, abfiltriert und mit konz. KCI-Lösung gewaschen. Man erhält nach dem Trocknen das Zwischenprodukt der Formel 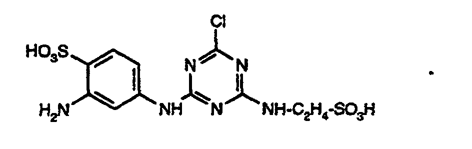 89,3 Teile dieser Verbindung werden in 400 Teilen Wasser angeschlämmt. Nun gibt man bei 0 - 5°C innerhalb von 10 Minuten 41,4 Teile nach üblichem Verfahren diazotiertes 2(4-Amino-phenylsulfonyl)-ethyl-hydrogensulfat zu und hält den pH mit Sodalösung 20% bei 6 - 8,5. Nach beendeter Kupplung fällt man den gelben Farbstoff mit KCI aus, filtriert die entstandene Suspension ab und trocknet im Vakuum. Man erhält die Monoazoverbindung der Formel 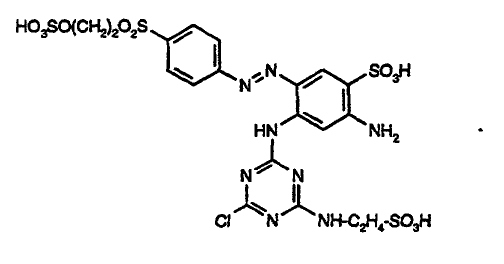 123 Teile dieser Verbindung werden in 700 Teilen Wasser gelöst, nach üblichem Verfahren mit Natriumnitrit und HCl bei 0 - 5°C diazotiert. Die Diazosuspension wird innert 30 Minuten bei 2-5°C zu einer neutralen Lösung aus 25,1 Teilen 1,3-Phenylendiamin-4-sulfosäure in 300 Teilen Wasser zugegeben.Den pH hält man mit Sodalösung 20% bei 4,5 - 5,5. Nach beendeter Kupplung fällt man den Farbstoff mit KCI aus und filtriert die entstandene Suspension ab. Man erhält einen braunen Farbstoff, der folgende Struktur aufweist. 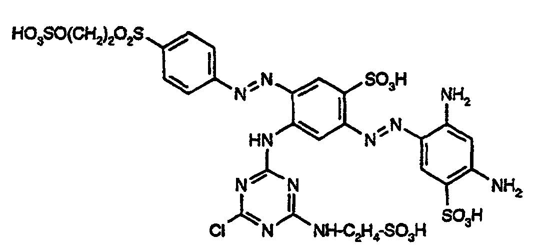 106 Teile dieses Farbstoffs werden in 400 Teilen Wasser gelöst. Danach werden bei 0 - 10°C innerhalb von 15 Minuten 32,3 Teile nach üblichem Verfahren mit Natriumnitrit und HCI diazotiertes 2(4-Amino-phenylsulfonyl)-ethyl-hydrogensulfat zugegeben. Man hält den pH mit 20%iger Sodalösung bei 5,5 - 7,0. Nach beendeter Kupplung wird mit KCI ausgefällt und filtriert. Nach dem Trocknen erhält man den Farbstoff der Formel 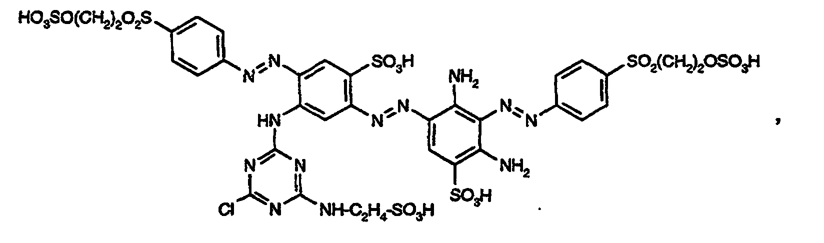 welcher Baumwolle in braunen Tönen mit guten Allgemeinechtheiten färbt.

Beispiel 2: Verfährt man wie im Beispiel 1 angegeben und verwendet anstelle von Taurin eine äquivalente Menge Ammoniumchlorid, so erhält man den Farbstoff der Formel 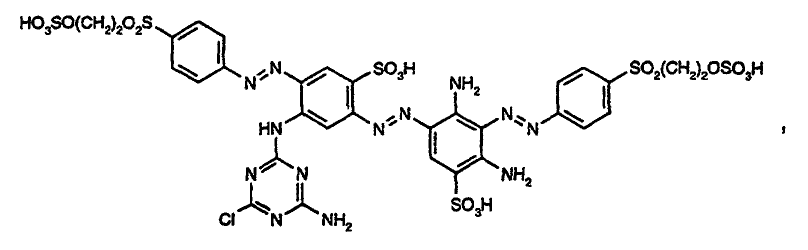 welcher Baumwolle in braunen Tönen mit guten Allgemeinechtheiten färbt.

Beispiele 3-31: Analog wie im Beispiel 1 beschrieben lassen sich die folgenden Reaktivfarbstoffe herstellen, die Baumwolle jeweils in der angegebenen Nuance mit guten Allgemeinechtheiten färben.

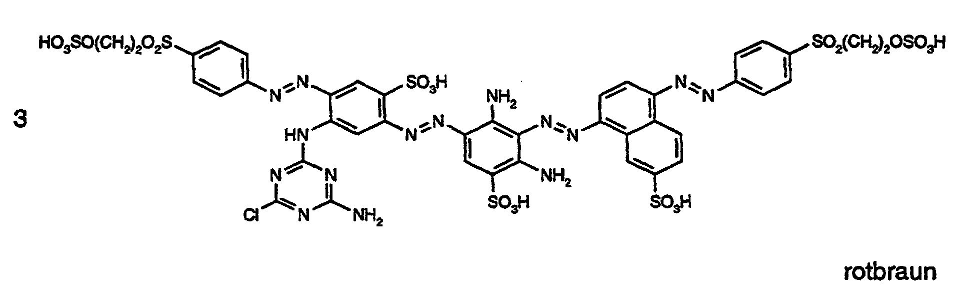

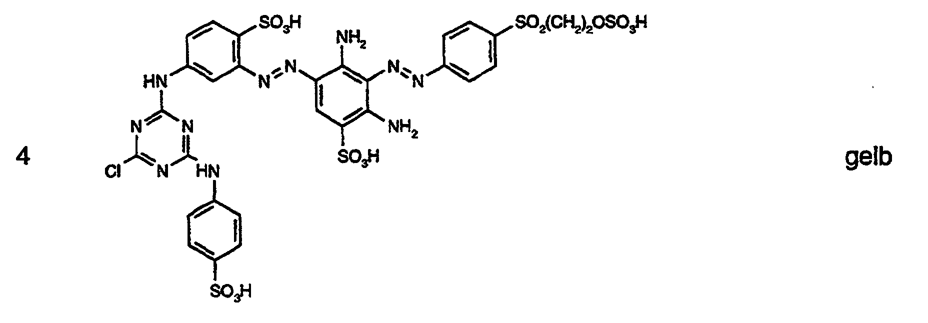

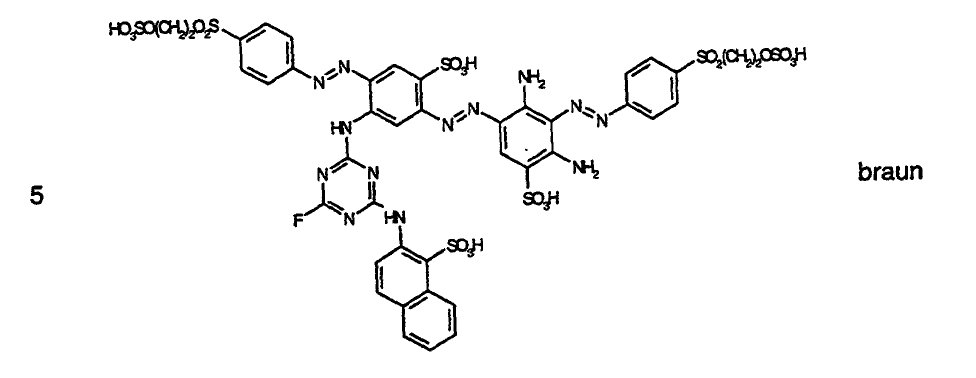

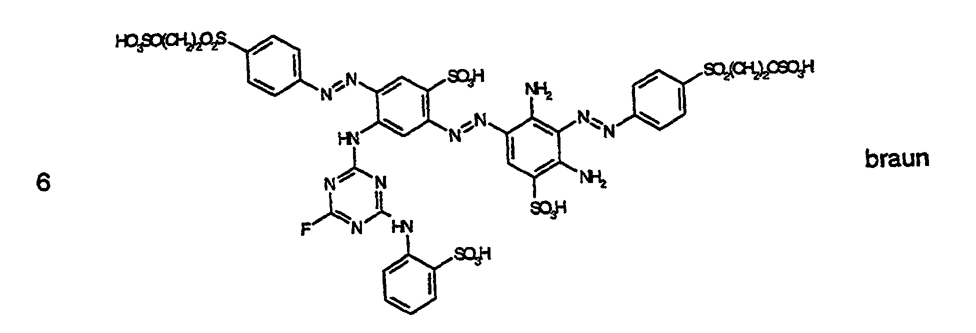

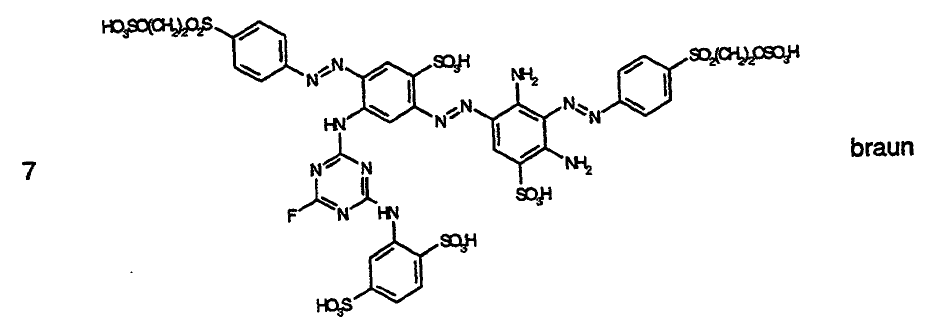

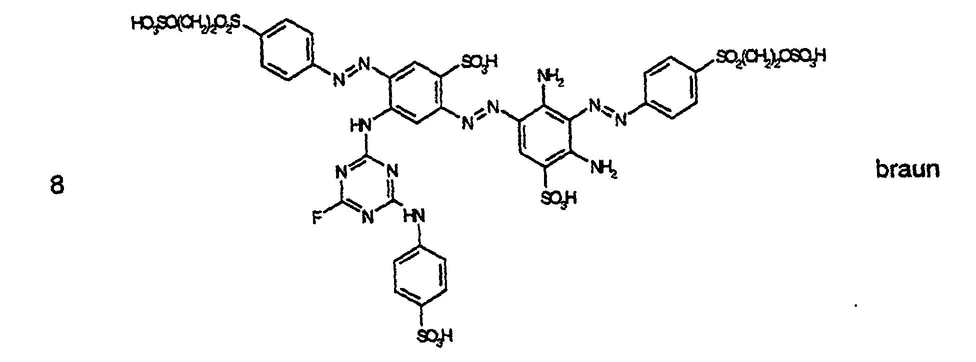

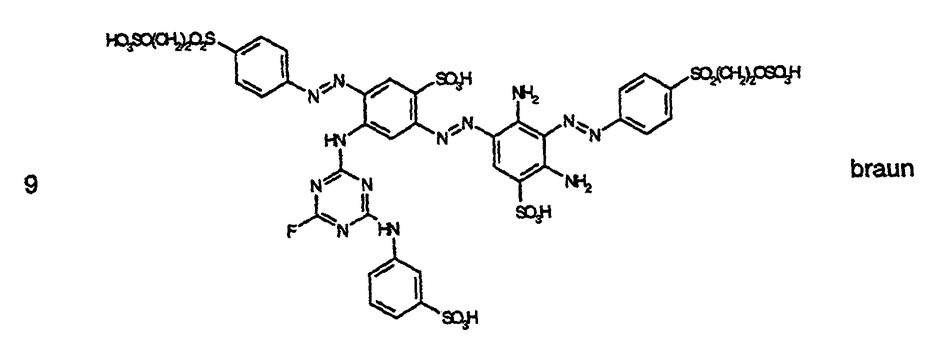

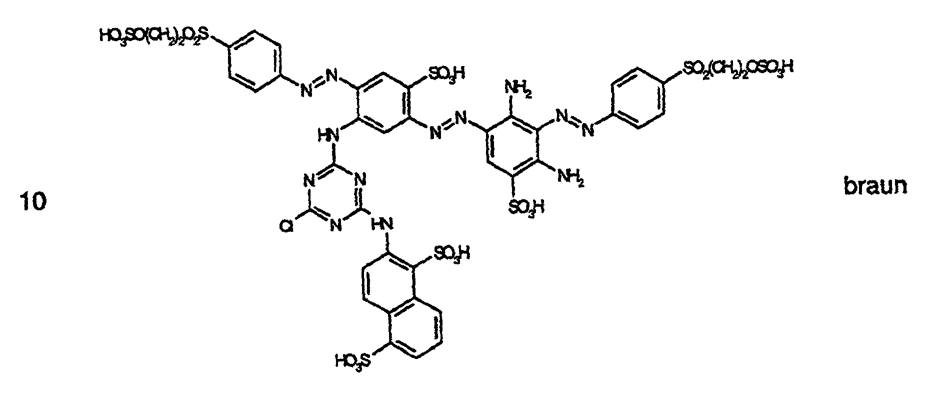

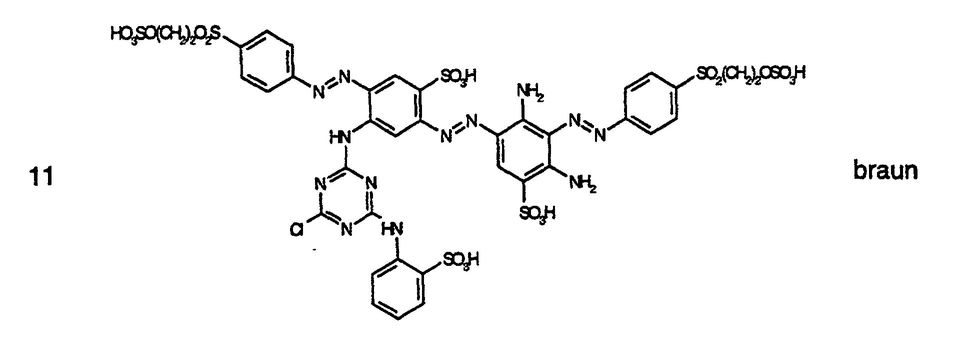

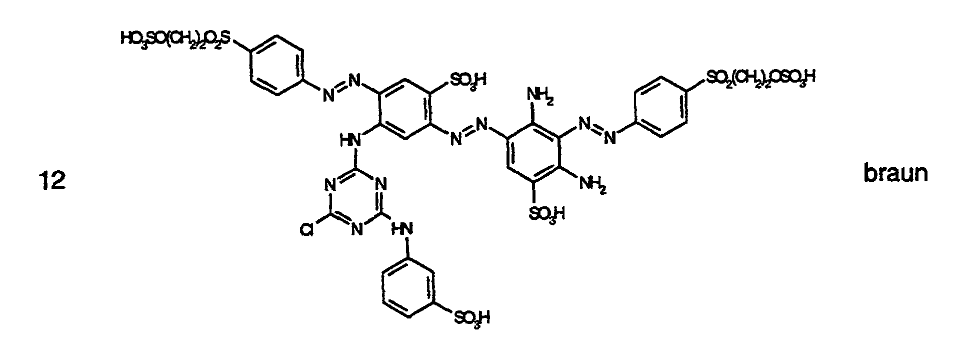

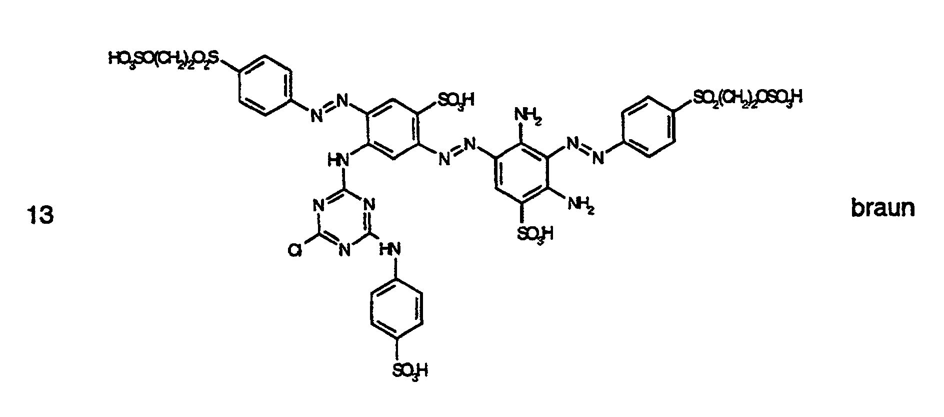

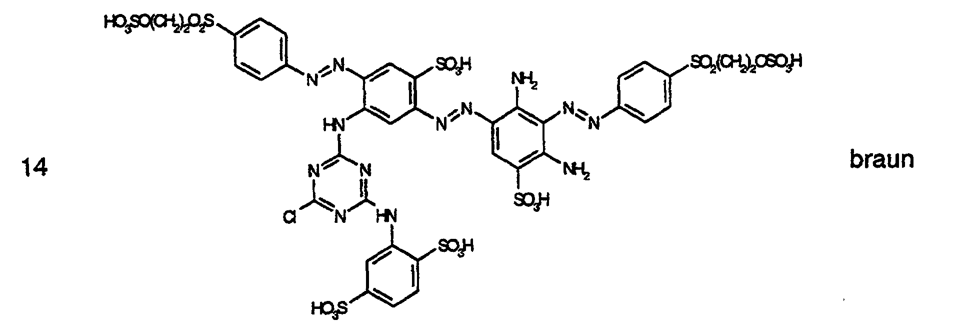

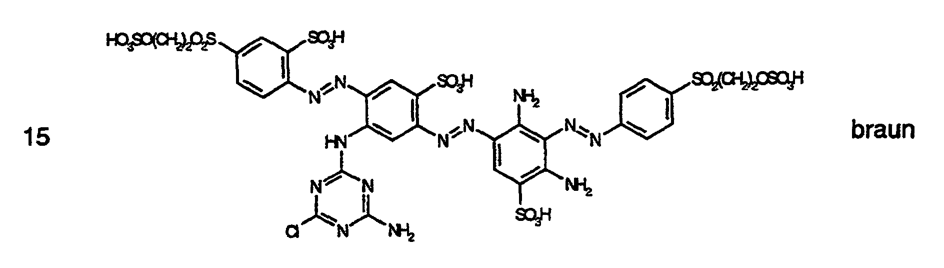

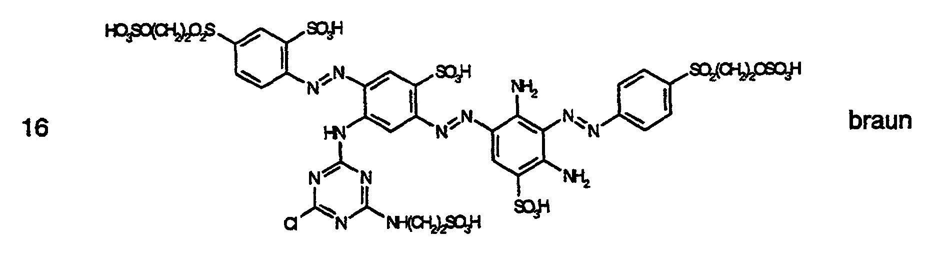

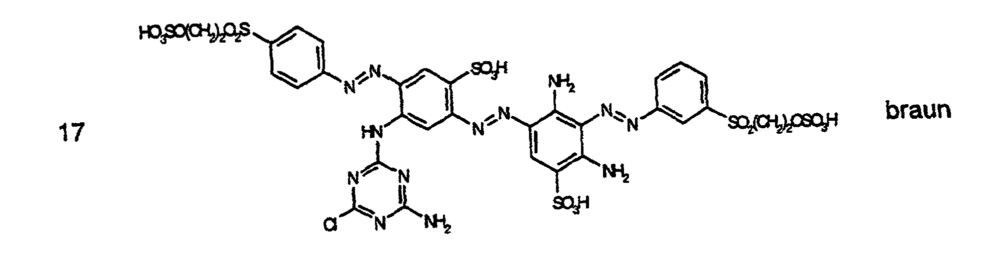

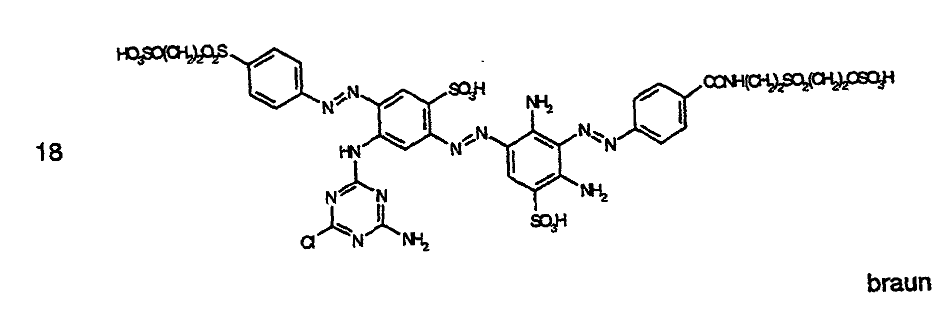

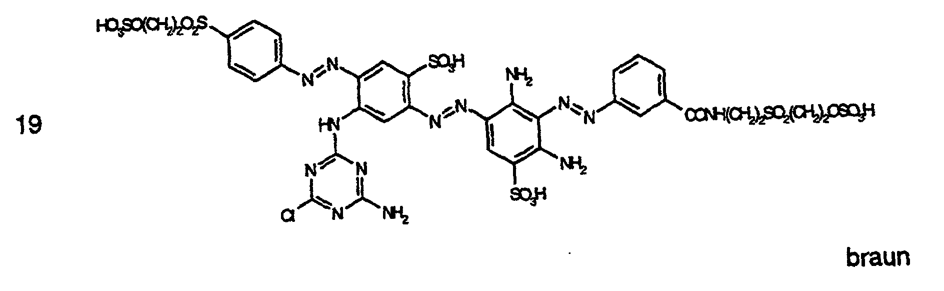

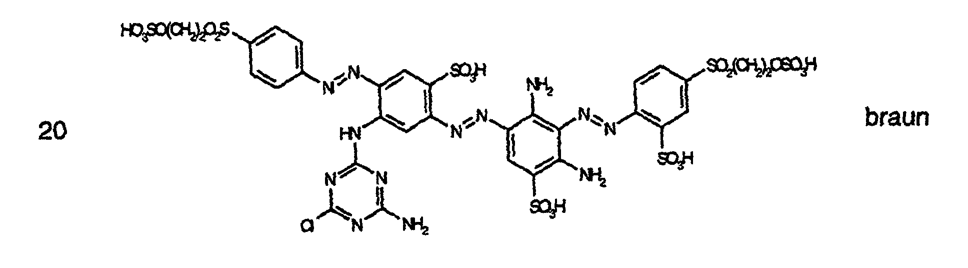

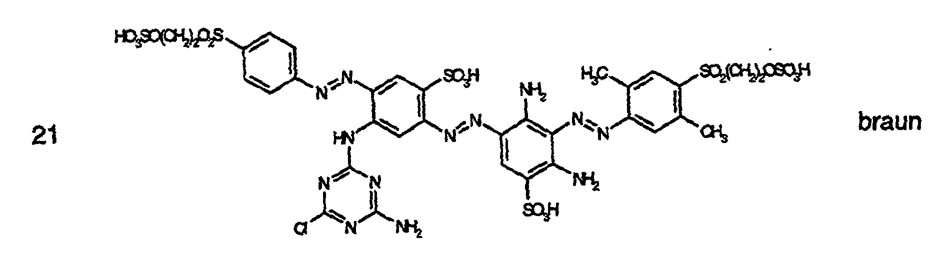

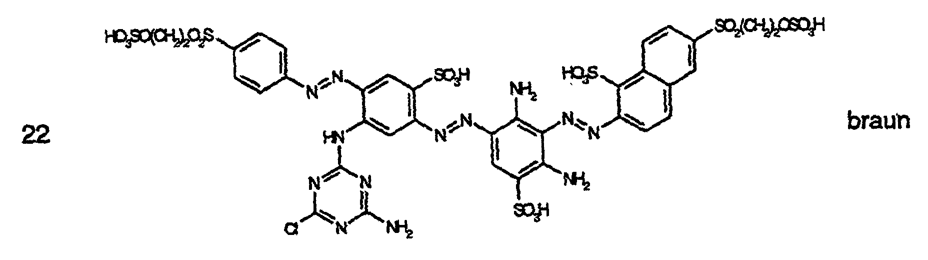

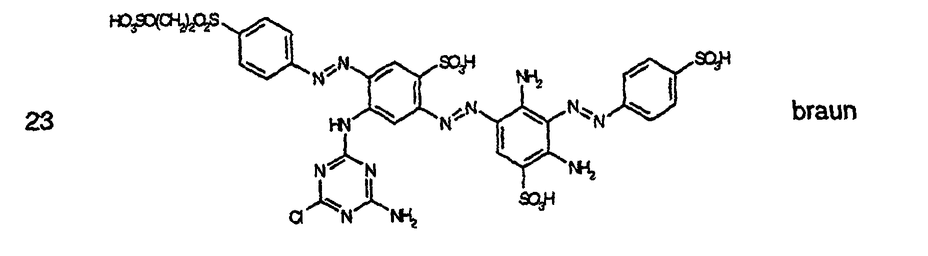

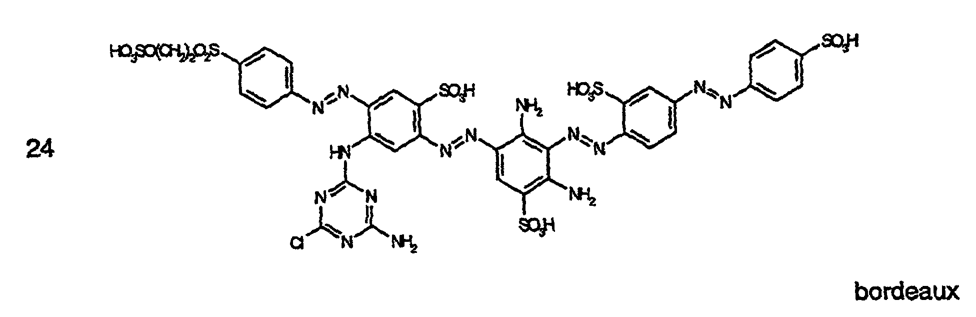

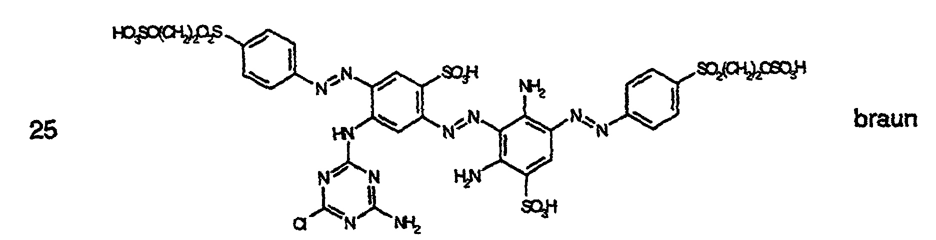

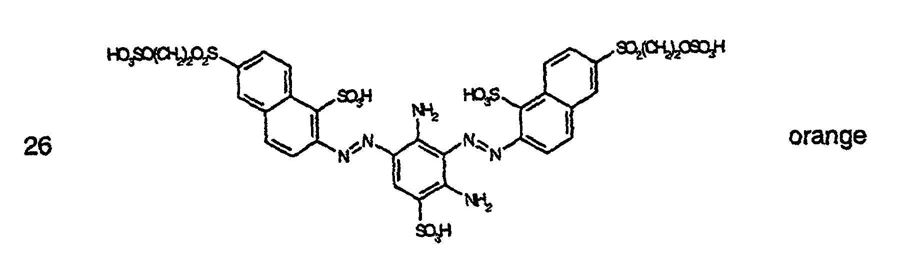

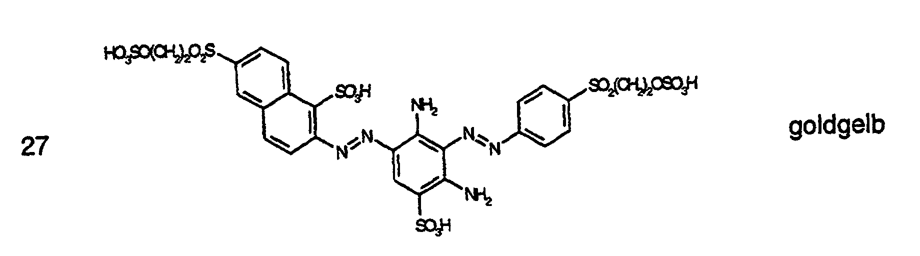

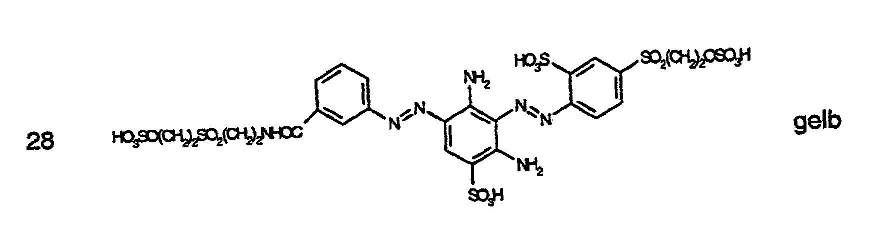

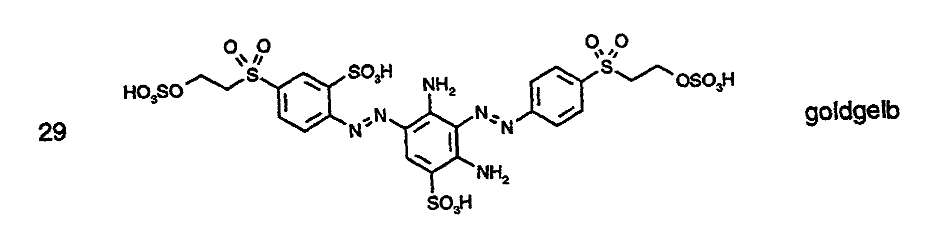

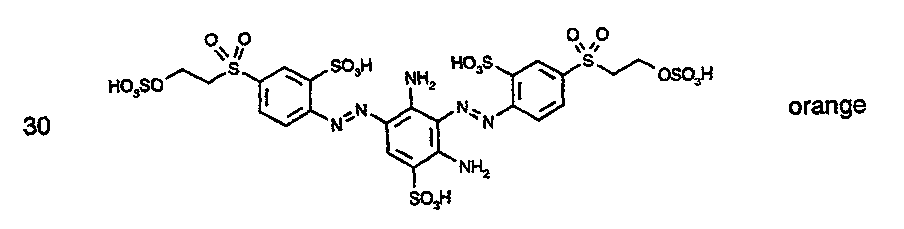

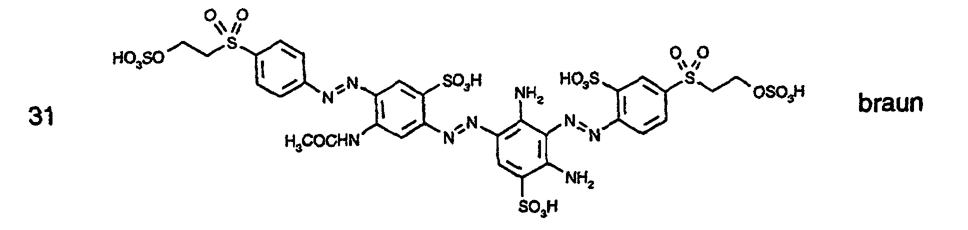

Färbevorschrift I: 2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 1 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10Minuten werden 200Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII: 0,1 Teile Farbstoff gemäss Beispiel 1 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Ucht- und Nassechtheiten aufweist.

Druckvorschrift I: 3 Teile des gemäss Beispiel 1 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitro benzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 1 erhaltenen Reaktivfarbstoffes werden unter schnellem Rühren in 100 Teile einer Stammverdickung, enthaltend 50 Teile 5%ige Natriumalgin verdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 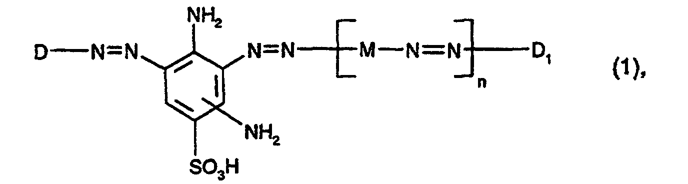
worin D₁ ein Rest der Formel 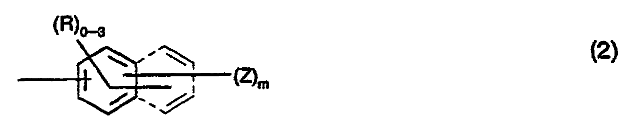 ist,
D für einen Rest der Formel 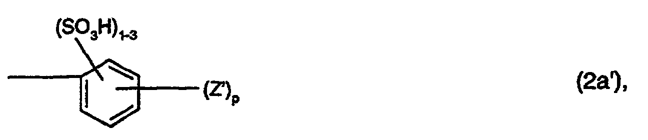 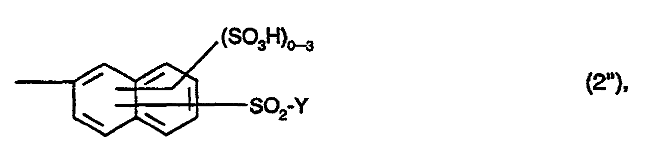 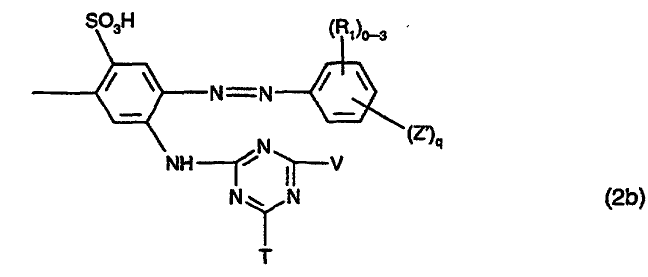 oder 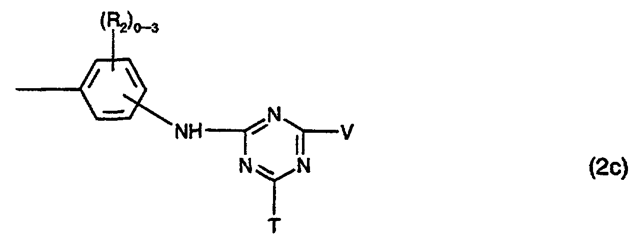 steht
M ein unsubstituierter oder durch Sulfo, C₁-C₄-Alkyl, C₁-C₄-Alkoxy, Halogen, C₂-C₄-Alkanoylamino, Ureido oder einen Rest der Formel 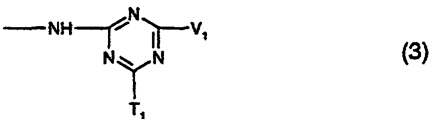 substituierter Phenylenrest oder ein unsubstituierter oder durch Sulfo oder Hydroxy substituierter Naphthylenrest ist,
(R)₀₋₃, (R₁)₀₋₃ und (R₂)₀₋₃ unabhängig voneinander je für 0 bis 3 gleiche oder verschiedene Reste aus der Gruppe Sulfo, C₁-C₄-Alkyl, C₁-C₄-Alkoxy und Halogen stehen,
T und T₁ unabhängig voneinander je Halogen oder unsubstituiertes oder durch Carbamoyl oder Carboxy substituiertes 1-Pyridinyl sind,
V und V₁ unabhängig voneinander je einen nicht-reaktiven Aminorest bedeuten,
Z und Z' unabhängig voneinander je für einen Rest der Formel
-SO₂-Y (4a)
oder
-CONH-(CH₂)ᵣ-SO₂-Y (4c)
stehen,
Y Vinyl oder einen Rest -CH₂-CH₂-U und U eine Abgangsgruppe bedeuten,
r für eine ganze Zahl von 1 bis 6 steht und
n, m, p und q unabhängig voneinander je die Zahl 0 oder 1 sind,
mit der Massgabe, dass m die Zahl 1 bedeutet, wenn D für einen Rest der Formel (2c) oder für einen Rest der Formel (2a) oder (2b), worin p oder q 0 ist, steht.

2. Verbindungen gemäss Anspruch 1, dadurch gekennzeichnet, dass Y Vinyl, β-Chlorethyl, β-Sulfatoethyl, β-Thiosulfatoethyl, β-Acetoxyethyl, β-Phenoxyethyl oder β-Phosphatoethyl bedeutet.

3. Verbindungen gemäss Anspruch 1 oder 2, dadurch gekennzeichnet, dass n die Zahl 0 und m die Zahl 1 bedeuten.

4. Verbindungen gemäss einem der Ansprüche 1 bis 3, dadurch gekennzeichnet, dass D₁ einen Rest der Formel 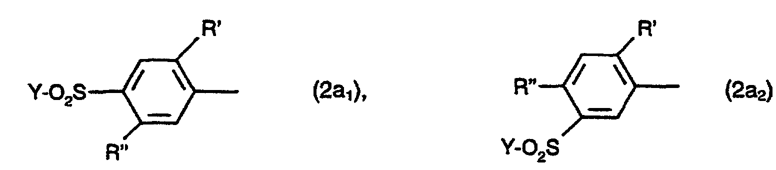 oder 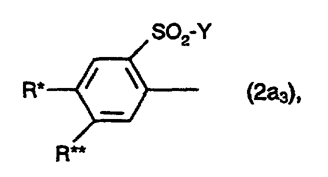 bedeutet, worin R' Wasserstoff, Methyl, Methoxy oder Sulfo, R" Wasserstoff oder Methoxy und einer der Reste R* und R** Wasserstoff und der andere Sulfo sind und Y für Vinyl, β-Chlorethyl, β-Sulfatoethyl, β-Thiosulfatoethyl, β-Acetoxyethyl, β-Phenoxyethyl oder β-Phosphatoethyl steht.

5. Verbindungen gemäss einem der Ansprüche 1 bis 4, dadurch gekennzeichnet, dass D ein Rest der Formel (2a'), (2") oder (2b) ist.

6. Verbindungen gemäss einem der Ansprüche 1 bis 5, dadurch gekennzeichnet, dass D für einen Rest der Formel 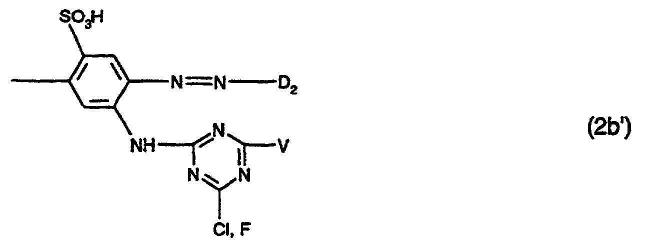 steht, worin D₂ einen Rest der Formel 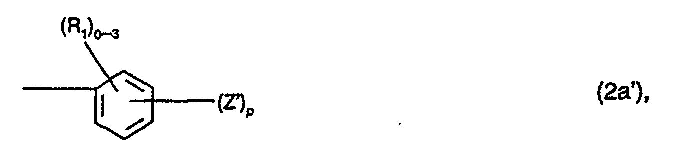 ist, (R₁)₀₋₃ 0 bis 3 Reste aus der Gruppe Sulfo, Methyl und Methoxy bedeutet, Z für einen Rest -SO₂-Y steht, Y Vinyl, β-Chlorethyl, β-Sulfatoethyl, β-Thiosulfatoethyl, β-Acetoxyethyl, β-Phenoxyethyl oder β-Phosphatoethyl bedeutet, m für die Zahl 1 steht und V Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy oder Sulfo substituiertes N-C₁-C₂-Alkyl-N-phenylamino oder Morpholino ist.

7. Verbindungen der Formel (1) gemäss Anspruch 6, dadurch gekennzeichnet, dass D₁ und D₂ unabhängig voneinander je 4-Vinylsulfonylphenyl oder 4-β-Sulfatoethylsulfonyl bedeuten.

8. Verbindungen gemäss Anspruch 1 der Formel 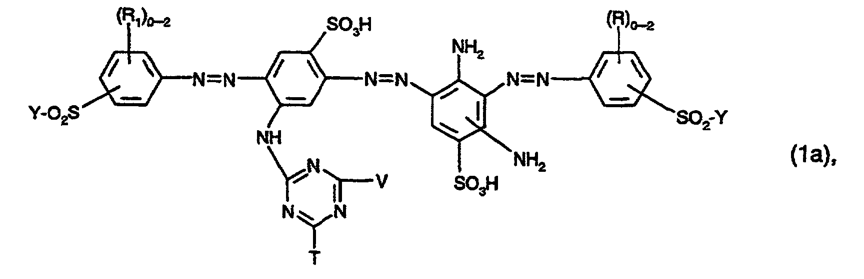 worin (R)₀₋₂ und (R₁)₀₋₂ gleich sind und je für 0 bis 2 gleiche oder verschiedene Reste aus der Gruppe Sulfo, Methyl und Methoxy stehen, Y Vinyl oder β-Sulfatoethyl ist, T Fluor oder Chlor bedeutet und V Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy oder Sulfo substituiertes N-C₁-C₂-Alkyl-N-phenylamino oder Morpholino ist.

9. Verbindungen gemäss Anspruch 1 der Formel 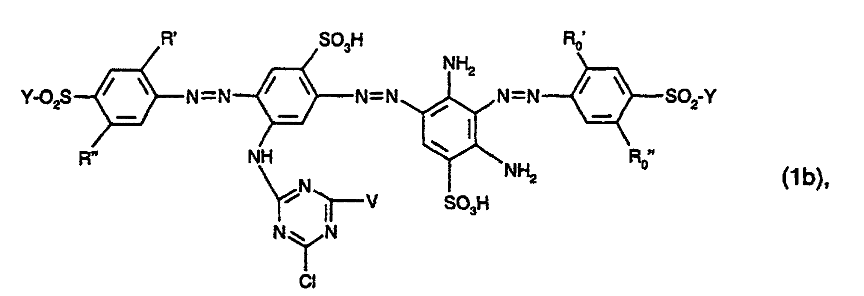 worin R' und R₀' unabhängig voneinander je Wasserstoff, Methyl, Methoxy oder Sulfo sind, R" und R₀" unabhängig voneinander je Wasserstoff oder Methoxy bedeuten, Y Vinyl oder β-Sulfatoethyl ist und V Amino, unsubstituiertes oder durch Sulfo substituiertes N-Mono- oder N,N-Di-C₁-C₂-Alkylamino, durch 1 bis 3 gleiche Reste aus der Gruppe Methyl, Methoxy und Sulfo substituiertes Phenylamino oder 1 bis 3 Sulfogruppen tragendes 1- oder 2-Naphthylamino bedeutet.

10. Verbindungen gemäss Anspruch 9, dadurch gekennzeichnet, dass R', R₀', R" und R₀" je Wasserstoff sind.

11. Verfahren zur Herstellung von Verbindungen der Formel (1) gemäss Anspruch 1, dadurch gekennzeichnet, dass man je 1 Moläquivalent einer Verbindung der Formel
D - NH₂ (7), 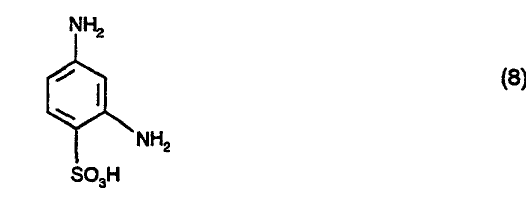
und 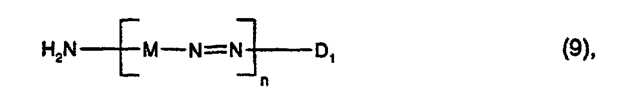 worin die Variablen die im Anspruch 1 angegebene Bedeutung haben, durch Diazotieren und Kuppeln in beliebiger Reihenfolge miteinander umsetzt.

12. Verwendung von Verbindungen der Formel (1) gemäss Anspruch 1 zum Färben oder Bedrucken von hydroxylgruppenhaltigen oder stickstoffhaltigen Fasermaterialien.

13. Verwendung gemäss Anspruch 12 zum Färben oder Bedrucken von cellulosehaltigen Fasermaterialien, insbesondere von baumwollhaltigen Fasermaterialien.

## Claims

1. A compound of formula 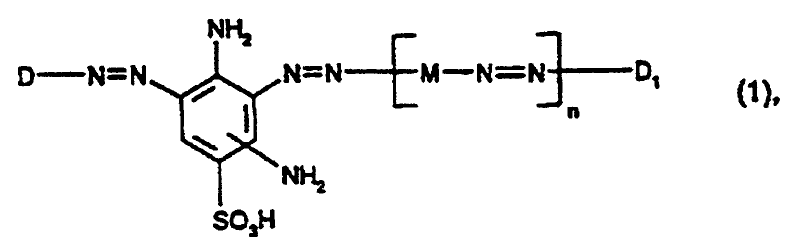
wherein D₁ is a radical of formula 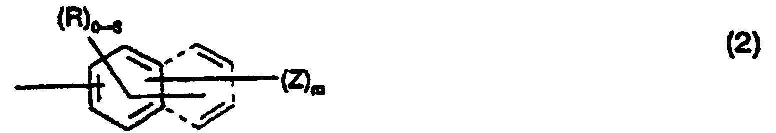
D is a radical of formula 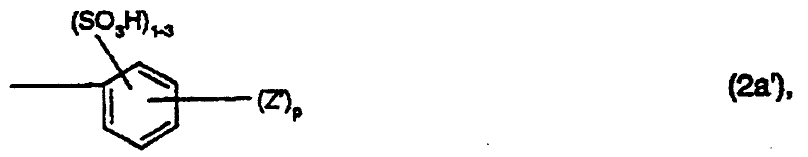 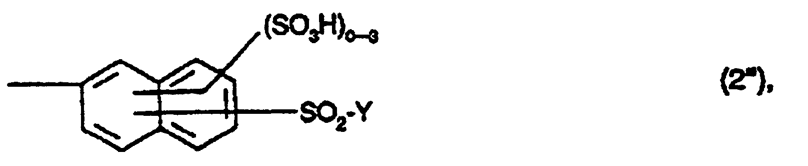 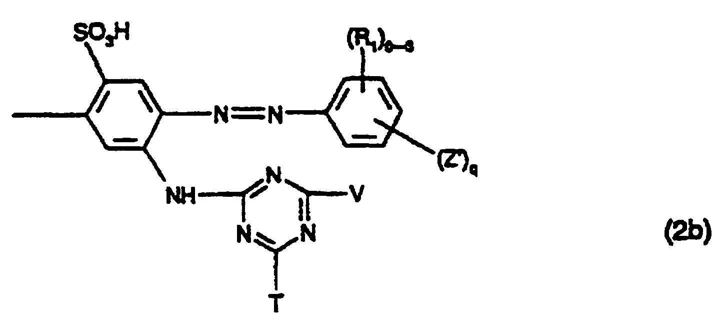 or 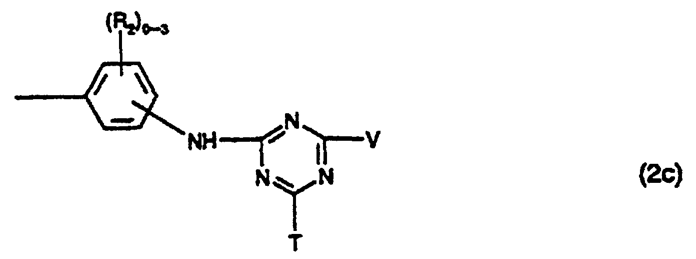
M is a phenylene radical which is unsubstituted or substituted by sulfo, C₁-C₄alkyl, C₁-C₄alkoxy, halogen, C₂-C₄alkanoylamino, ureido or a radical of formula 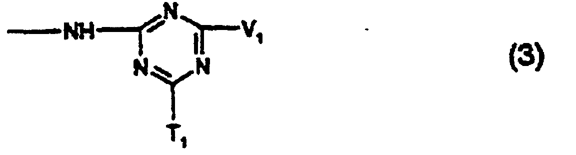 or a naphthylene radical which is unsubstituted or substituted by sulfo or hydroxy, (R)₀₋₃, (R₁)₀₋₃ and (R₂)₀₋₃ are each independently of one another 0 to 3 identical or different radicals from the group consisting of sulfo, C₁-C₄alkyl, C₁-C₄alkoxy and halogen, T and T₁ are each independently of the other halogen or 1-pyridinyl which is unsubstituted or substituted by carbamoyl or carboxy,
V and V₁ are each independently of the other a nonreactive amino radical,
Z and Z' are each independently of the other a radical of formula
-SO₂-Y (4a)
or
-CONH- (CH₂)ᵣ-SO₂-Y (4b),
Y is vinyl or a -CH₂-CH₂-U radical, and U is a leaving group,
r is an integer from 1 to 6, and
n, m, p and q are each independently of one another a number from 0 to 1,
with the proviso that m is 1 if D is a radical of formula (2c) or a radical of formula (2a) or (2b) in which p or q is 0.

2. A compound according to claim 1, wherein Y is vinyl, β-chloroethyl, β-sulfatoethyl, β-thiosulfatoethyl, β-acetoxyethyl, β-phenoxyethyl or β-phosphatoethyl.

3. A compound according to claim 1 or 2, wherein n is 0 and m is 1.

4. A compound according to any one of claims 1 to 3, wherein D₁ is a radical of formula 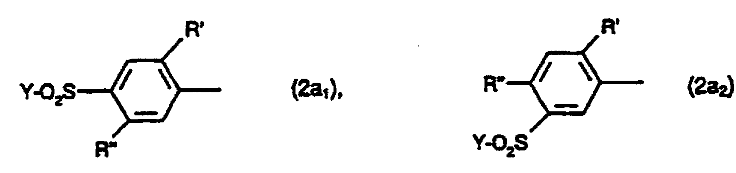 or 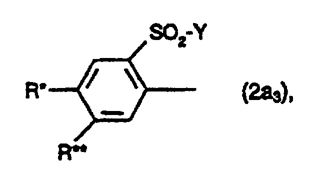 in which R' is hydrogen, methyl, methoxy or sulfo, R" is hydrogen or methoxy, and one of R* and R** is hydrogen and the other is sulfo, and Y is vinyl, β-chloroethyl, β-sulfatoethyl, β-thiosulfatoethyl, β-acetoxyethyl, β-phenoxyethyl or β-phosphatoethyl.

5. A compound according to any one of claims 1 to 4, wherein D is a radical of formula (2a'), (2") or (2b).

6. A compound according to any one of claims 1 to 5, wherein D is a radical of formula 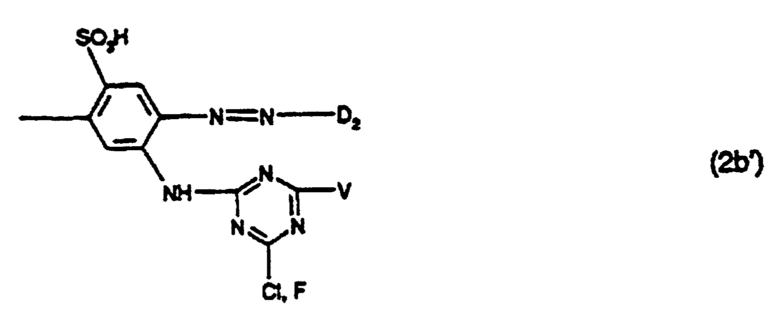 in which D₂ is a radical of formula 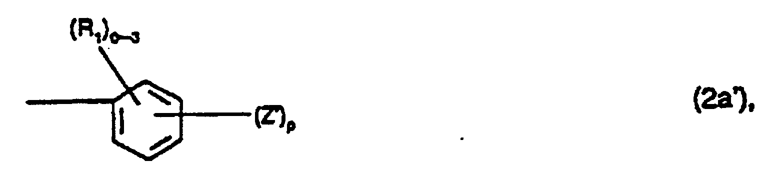 in which (R₁)₀₋₃ is 0 to 3 radicals from the group consisting of sulfo, methyl and methoxy, Z is a radical -SO₂-Y, Y is vinyl, β-chloroethyl, β-sulfatoethyl, β-thiosulfatoethyl, β-acetoxyethyl, β-phenoxyethyl or β-phosphatoethyl, m is 1, and V is amino; N-mono- or N,N-di-C₁-C₂alkylamino which is unsubstituted or substituted by hydroxy, sulfo or sulfato; cyclohexylamino; phenylamino or naphthylamino which is unsubstituted or substituted by methyl, methoxy, carboxy or sulfo; N-C₁-C₂alkyl-N-phenylamino which is unsubstituted or substituted in the alkyl moiety by hydroxy or sulfo; or morpholino.

7. A compound of formula (1) according to claim 6, wherein D₁ and D₂ are each independently of the other 4-vinylsulfonylphenyl or 4-β-sulfatoethylsulfonyl.

8. A compound according to claim 1 of formula 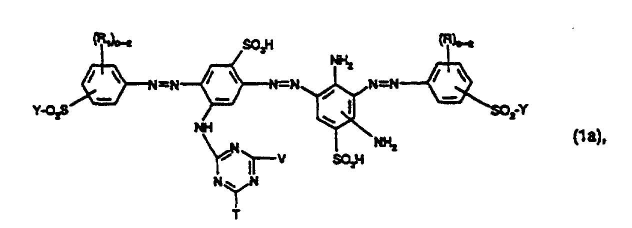 wherein (R)₀₋₂ and (R₁)₀₋₂ are identical and are each 0 to 2 identical or different radicals from the group consisting of sulfo, methyl and methoxy, Y is vinyl or β-sulfatoethyl, T is fluoro or chloro, and V is amino; N-mono- or N,N-di-C₁-C₂alkylamino which is unsubstituted or substituted by hydroxy, sulfo or sulfato; cyclohexylamino; phenylamino or naphthylamino which is unsubstituted or substituted by methyl, methoxy, carboxy or sulfo; N-C₁-C₂alkyl-N-phenylamino which is unsubstituted or substituted in the alkyl moiety by hydroxy or sulfo; or morpholino.

9. A compound according to claim 1 of formula 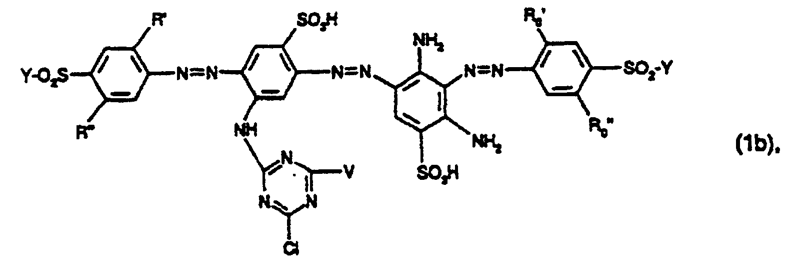 wherein R' and R₀' are each independently of the other hydrogen, methyl, methoxy or sulfo, R" and R₀" are each independently of the other hydrogen or methoxy, Y is vinyl or β-sulfatoethyl, and V is amino; unsubstituted or sulfo-substituted N-mono- or N,N-di-C₁-C₂alkylamino; phenylamino which is substituted by 1 to 3 identical radicals from the group consisting of methyl, methoxy and sulfo; or 1- or 2-naphthylamino carrying 1 to 3 sulfo groups.

10. A compound according to claim 9, wherein R', R₀', R" and R₀" are each hydrogen.

11. A process for the preparation of a compound of formula (1) according to claim 1, which comprises reacting about 1 molar equivalent each of a compound of formula
D-NH₂ (7), 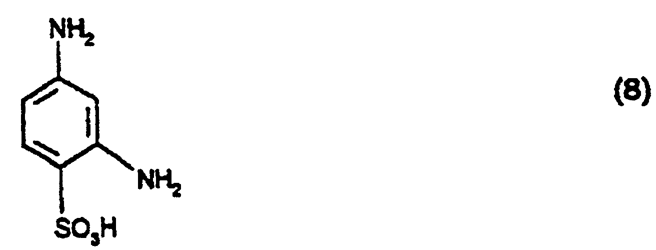
and 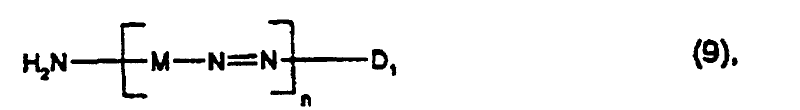 in which the variables have the meanings given in claim 1 with each other by diazotizing and coupling in any order.

12. The use of a compound of formula (1) according to claim 1 for dyeing or printing hydroxyl-containing or nitrogen-containing fibre materials.

13. The use according to claim 12 for dyeing or printing cellulosic fibre materials, especially cotton-containing fibre materials.

## Revendications

1. Composés de formule 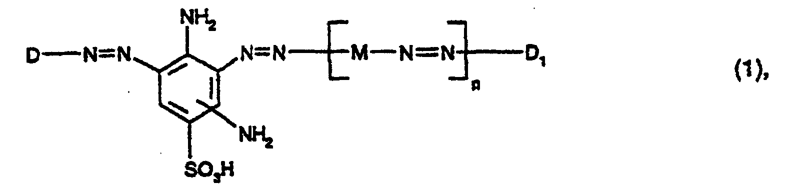
dans laquelle D₁ est un groupe de formule 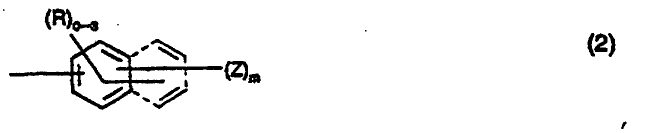
D représente un groupe de formule 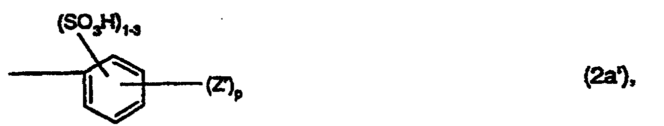 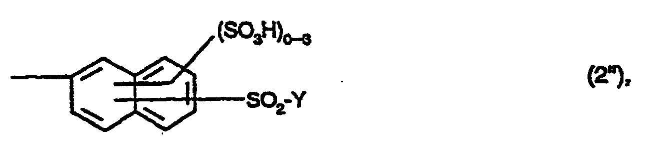 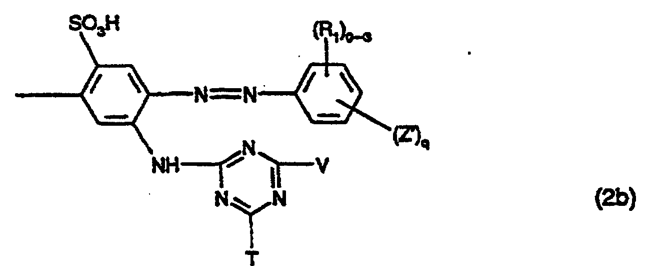 ou 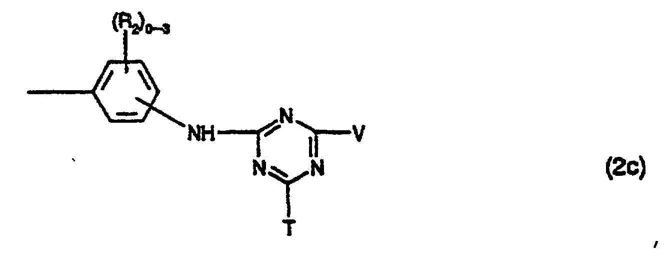
M un groupe phénylène non substitué ou substitué par un groupe sulfo, alkyle en C₁ à C₄, alcoxy en C₁ à C₄, un atome d'halogène, un groupe alcanoylamino en C₂ à C₄, uréido ou un groupe de formule 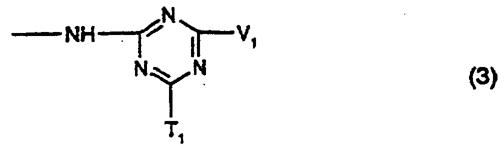 ou un groupe naphtylène non substitué ou substitué par un groupe sulfo ou hydroxy,
(R)₀₋₃, (R₁)₀₋₃ et (R₂)₀₋₃ représentent indépendamment les uns des autres de 0 à 3 groupes identiques ou différents choisis parmi les groupes sulfo, alkyle en C₁ à C₄, alcoxy en C₁ à C₄ et un atome d'halogène,
T et T₁ représentent indépendamment l'un de l'autre respectivement un atome d'halogène ou un groupe 1-pyridinyle non substitué ou substitué par un groupe carbamoyle ou carboxy,
V et V₁ représentent indépendamment l'un de l'autre respectivement un groupe amino non réactif,
Z et Z' représentent indépendamment l'un de l'autre respectivement un groupe de formule
-SO₂-Y (4a)
ou
-CONH-(CH₂)ᵣ-SO₂-Y (4b),
Y représente un groupe vinyle ou un résidu -CH₂-CH₂-U et
U est un groupe partant,
r représente un nombre entier compris entre 1 et 6 et
n, m, p et q sont indépendamment les uns des autres respectivement le nombre 0 ou 1,
avec la condition, que m représente le nombre 1, lorsque D est un groupe de formule (2c) ou un groupe de formule (2a) ou (2b), dans laquelle p ou q est 0.

2. Composés selon la revendication 1, caractérisés en ce que, Y représente un groupe vinyle, β-chloroéthyle, β-sulfatoéthyle, β-thiosulfatoéthyle, β-acétoxyéthyle, β-phénoxyéthyle ou β-phosphatoéthyle.

3. Composés selon la revendication 1 ou 2, caractérisés en ce que n représente le nombre 0 et m le nombre

4. Composés selon l'une des revendications 1 à 3, caractérisés en ce que D₁ représente un résidu de formule 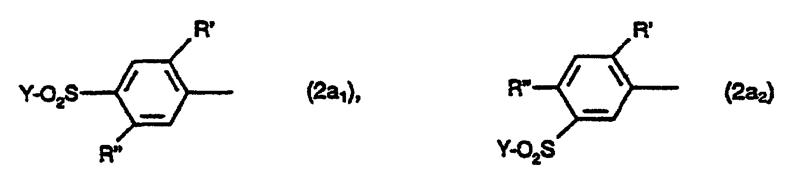 ou 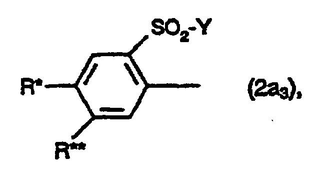 dans lesquelles R' est un atome d'hydrogène, un groupe méthyle, méthoxy ou sulfo, R" un atome d'hydrogène ou un groupe méthoxy et l'un des groupes R* et R** un atome d'hydrogène et l'autre un groupe sulfo et Y représente un groupe vinyle, β-chloroéthyle, β-sulfatoéthyle, β-thiosulfatoéthyle, β-acétoxyéthyle, β-phénoxyéthyle ou β-phosphatoéthyle.

5. Composés selon l'une des revendications 1 à 4, caractérisés en ce que D est un résidu de formule (2a'), (2") ou (2b).

6. Composés selon l'une des revendications 1 à 5, caractérisés en ce que D représente un résidu de formule 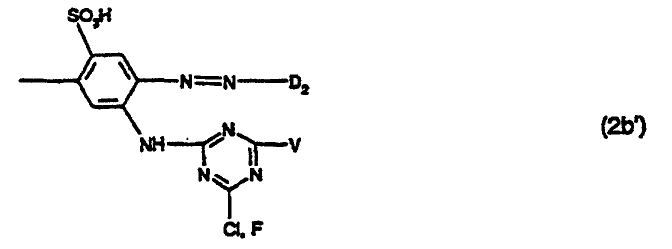 dans laquelle D₂ est un groupe de formule 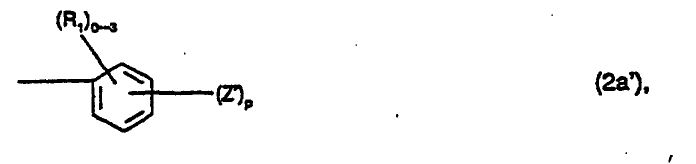 (R₁)₀₋₃ représente de 0 à 3 groupes choisis parmi les groupes sulfo, méthyle ou méthoxy, Z représente un groupe -SO₂-Y, Y vinyle, β-chloroéthyle, β-sulfatoéthyle, β-thiosulfatoéthyle, β-acétoxyéthyle, β-phénoxyéthyle ou β-phosphatoéthyle, m représente le nombre 1 et V est un groupe amino, N-mono- ou N,N-dialkylamino en C₁-C₂ non substitué ou substitué par un groupe hydroxy, sulfato ou sulfo, cyclohexylamino, phénylamino ou naphtylamino non substitué ou substitué par un groupe méthyle, méthoxy, carboxy ou sulfo, N-alkyle en C₁-C₂-N-phénylamino non substitué ou substitué dans la partie alkyle par un groupe hydroxy ou sulfo ou morpholino.

7. Composés de formule (1) selon la revendication 6, caractérisés en ce que D₁ et D₂ représentent indépendamment l'un de l'autre un groupe 4-vinylsulfonylphényle ou 4-β-sulfatoéthylsulfonyle.

8. Composés selon la revendication 1 de formule 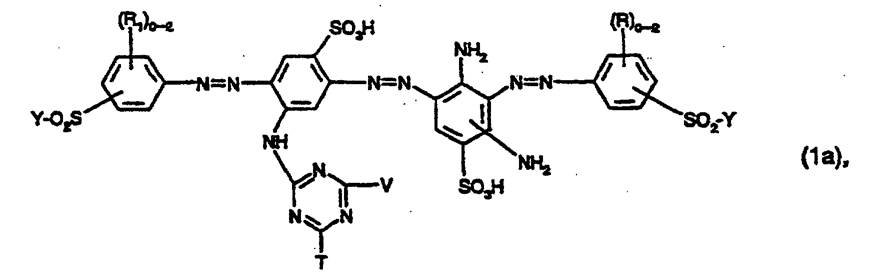 dans laquelle (R)₀₋₂ et (R₁)₀₋₂ sont identiques et représentent de 0 à 2 groupes identiques ou différents choisis parmi les groupes sulfo, méthyle et méthoxy, Y représente le vinyle ou le β-sulfatoéthyle, T le fluor ou le chlore et V un groupe amino, N-mono- ou N,N-dialkylamino en C₁-C₂ non substitué ou substitué par un groupe hydroxy, sulfato ou sulfo, cyclohexylamino, phénylamino non substitué ou substitué par un groupe méthyle, méthoxy, carboxy ou sulfo, ou naphtylamino, non substitué ou substitué dans la partie alkyle par un groupe hydroxy ou sulfo, N-alkyle en C₁-C₂-N-phénylamino non substitué ou substitué dans la partie alkyle par un groupe hydroxy ou sulfo, ou morpholino.

9. Composés selon la revendication 1 de formule 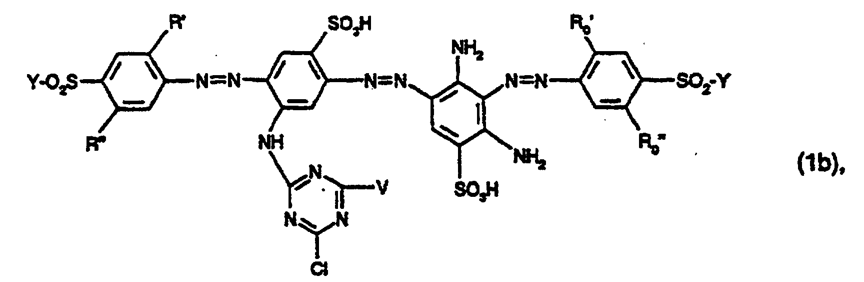 dans laquelle R' et Ro' sont indépendamment l'un de l'autre un atome d'hydrogène, un groupe méthyle, méthoxy ou sulfo, R" et Ro" représentent indépendamment l'un de l'autre un atome d'hydrogène ou un groupe méthoxy, Y est un groupe vinyle ou β-sulfatoéthyle et V est amino, N-mono- ou N,N-di-alkyle en C₁-C₂-amino non substitué ou substitué par un groupe sulfo, phénylamino non substitué ou substitué par 1 à 3 groupes choisis parmi le méthyle, le méthoxy et le sulfo ou naphtylamino portant de 1 à 3 groupes sulfo.

10. Composés selon la revendication 9, caractérisés en ce que R', Ro', R" et Ro" sont respectivement un atome d'hydrogène.

11. Procédé pour la préparation de composés de formule (1) selon la revendication 1, caractérisé en ce que, l'on met à réagir les uns avec les autres respectivement 1 équivalent molaire d'un composé de formule
**D-NH**_{**2**} **(7),** 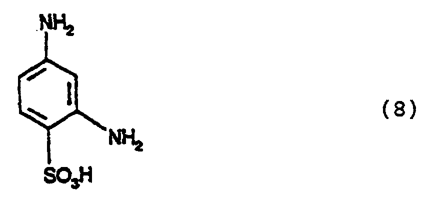
et 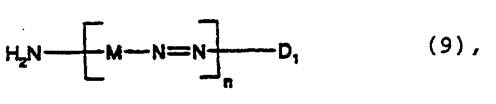 dans lesquelles les variables ont les significations indiquées à la revendication 1, par diazotation et copulation dans un ordre quelconque.

12. Utilisation de composés de formule (1) selon la revendication 1 pour la teinture ou l'impression de matériaux fibreux contenant des groupes hydroxyle ou contenant de l'azote.

13. Utilisation selon la revendication 12 pour la coloration ou l'impression de matériaux fibreux cellulosiques, en particulier de matériaux fibreux contenant du coton.
